# EUROPÄISCHE PATENTANMELDUNG

(11) **EP 0 691 253 A1**
(43) Veröffentlichungstag der Anmeldung: **10.01.1996**
(21) Anmeldenummer: 95250159.1
(22) Anmeldetag: 03.07.1995
(51) Int. Cl.: B62B 1/12

(54) **Klappkarre**

(30) Priorität: 07.07.1994 DE 9411916 U
(71) Anmelder: KST Kunststofftechnik GmbH, D-56377 Seelbach (DE)
(72) Erfinder: Fürbeth, Alfred, D-56132 Dausenau (DE); Berbegal Nauarro, Antonio, E-03440 Ibi (Alicante) (ES)
(74) Vertreter: Ninnemann, Detlef, Dipl.-Ing.

(57) **Zusammenfassung**

Die Erfindung betrifft eine Klappkarre mit mindestens zwei oberen und zwei unteren gegeneinander verschiebbaren Holmen sowie mit an den unteren Holmenpaaren angebrachten Radträgern mit Rädern. Erfindungsgemäß ist diese Klappkarre dadurch gekennzeichnet, daß mindestens eine Lastaufnahme vorgesehen ist, die aus mindestens einem flächenförmigen Teil (16, 17) besteht, das um eine quer zu den Radachsen (A - A) verlaufende Achse (B - B) schwenkbar ist, und daß die unteren Holme (6, 7) ebenfalls um quer zu den Radachsen (A - A) verlaufende Achsen (B - B) schwenkbar sind.Der Vorteil dieser Klappkarre besteht darin, daß nur eine geringe Zahl von Gelenken und Streben erforderlich ist, um in Arbeitsstellung eine ausreichende Stabilität zu erzielen und um das Zusammenlegen zu ermöglichen.

## Beschreibung

Die Erfindung betrifft eine Klappkarre nach dem Oberbegriff des Anspruchs 1.

Klappkarren für die Gepäckbeförderung sind bekannt. So ist aus der EP-A 0 399 364 ein zusammenlegbare Gepäckkarre bekannt, die zwei relativ zueinander verschiebbare Bügel aufweist. Die Bügel bestehen aus jeweils zwei Holmen und sind durch Kupplungsglieder miteinander verbunden, wobei zwei obere Kupplungsglieder an den Holmen des unteren Bügels befestigt sind und die oberen Holme in diesen Kupplungsgliedern verschiebbar sind. Zwei untere Kupplungsglieder sind am unteren Ende der oberen Holme befestigt und sind auf den unteren Holmen verschiebbar.

Weiterhin sind an den unteren Holmen zwei Radträger mit Rädern sowie ein Rahmen als Lastaufnahme vorgesehen. Sowohl die Radträger mit den Rädern als auch die Lastaufnahme sind in die Ebene der Bügel schwenkbar.

Der Nachteil dieser Gepäckkarre besteht darin, daß sie im zusammengeklappten Zustand zwar flach ist, daß die Breite aber unverändert bleibt.

Aus der EP-A 0 009 763 und der WO 93/05993 ist eine zusammenklappbare Gepäckkarre bekannt, die einen Schaft aufweist, der aus teleskopartig ineinander verschiebbaren Teilen besteht. Weiterhin sind zwei Schenkel mit Streben vorgesehen, die auf einer Führung axial verschiebbar sind, indem sie mit einem auf der Führung axial verschiebbaren Teil gelenkig verbunden sind. Es sind Tragarme zur Aufnahme der Last vorgesehen, die an die Führung angeklappt werden können.

Diese Gepäckkarren lassen sich zwar weitestgehend zusammenklappen. Der Nachteil dieser Gepäckkarren besteht aber darin, daß für die Aufnahme der Lasten lediglich zwei Tragarme vorgesehen sind, die nicht miteinander verbunden sind. Beim Transport schmaler Gepäckstücke besteht deshalb die Gefahr, daß diese durch die vorhandene Lücke hindurchrutschen.

Ein weiterer Nachteil besteht darin, daß eine große Zahl von Gelenken und Streben erforderlich ist, um in Arbeitsstellung eine ausreichende Stabilität zu erzielen und um das Zusammenlegen zu ermöglichen.

Der Erfindung liegt deshalb die Aufgabe zugrunde, eine zu einem Kompaktpaket zusammenklappbare Klappkarre mit einer sicheren Lastaufnahme zu schaffen, bei der der Aufwand für die Sicherung der Stabilität in Arbeitsstellung und für das Zusammenklappen der Karre verringert werden.

Erfindungsgemäß wird das gemäß den kennzeichnenden Merkmalen des Anspruchs 1 erreicht.

Bei einer Klappkarre mit zwei oberen und zwei unteren gegeneinander verschiebbaren Holmen sowie mit an den unteren Holmenpaaren angebrachten Radträgern mit Rädern wird das erfindungsgemäß dadurch erreicht, daß mindestens eine Lastaufnahme vorgesehen ist, die aus mindestens einem flächenförmigen Teil besteht, das um eine quer zu den Radachsen verlaufende Achse schwenkbar ist, und daß die unteren Holme ebenfalls um quer zu den Radachsen verlaufende Achsen schwenkbar sind.

Die quer verlaufende Achse kann z. B. unter 90° aber auch unter einem davon abweichenden Winkel zu den Radachsen verlaufen.

Die unteren Holme sind vorzugsweise an ihren oberen Enden schwenkbar gelagert.

Sofern eine Lastaufnahme vorgesehen ist, die aus einem Teil besteht, erstreckt sich dieses Teil zweckmäßig im Bereich der unteren Enden der unteren Holme zwischen diesen Holmen. Im Bereich einer der Holme ist das Teil schwenkbar befestigt und im Bereich des anderen Holmes ist dem Teil eine Auflage zugeordnet.

In einer bevorzugten Ausführungsform ist eine Lastaufnahme aus zwei aneinanderklappbaren flächenförmigen Teilen vorgesehen, die im Bereich der unteren Enden der unteren Holme schwenkbar befestigt sind, wobei jedes Teil mindestens ein unter einem Winkel, vorzugsweise unter einem rechten Winkel zur Lastaufnahmefläche der Teile verlaufendes Randteil aufweist, die in der Lastaufnahmestellung der Teile mit ihren Stirnseiten aneinanderliegen. Die Randteile unterstützen einerseits die Arbeitslage der Teile der Lastaufnahme, d.h. verhindern auch das Wegklappen der Teile über die Arbeitslage hinaus nach unten, und andererseits bilden sie eine Anlage für die zu transportierende Last.

Es ist zweckmäßig, daß die Teile der Lastaufnahme an den Radträgern angeordnet sind und daß sie untereinander gelenkig verbunden sind. Für die gelenkige Verbindung der Teile der Lastaufnahme untereinander und an den Radträgern können z. B. Scharniere vorgesehen sein.

Weiterhin ist ein Verbindungsteil vorgesehen, in dem zwei untere Holme schwenkbar und zwei obere Holme verschiebbar gelagert sind. Das Verbindungsteil ist gleichzeitig als Griff ausgebildet.

Die oberen Holme verlaufen vorzugsweise parallel zueinander, während die unteren Holme vom Verbindungsteil ausgehend zwischen einer parallelen und einer in Richtung der Radträger divergent verlaufenden Stellung schwenkbar sind.

In einer vorteilhaften Ausführungsform besteht das Verbindungsteil aus zwei Halbteilen, wobei jedes Halbteil Vertiefungen für die Aufnahme der unteren Holme, Vertiefungen für die Aufnahme der oberen Holme sowie eine Vertiefung für den Querholm aufweist. Die Vertiefungen sind so gestaltet, daß die unteren Holme in ihnen drehbar und die oberen Holme darin verschiebbar sind. Nach dem Zusammenfügen der Verbindungsteile bilden diese Vertiefungen Führungskanäle, die die Holme umfassen.

Die oberen Holme weisen an ihren unteren Enden Ansätze auf, denen Anschläge mindestens in einem Halbteil des Verbindungsteils zugeordnet sind, und die Ansätze liegen in Arbeitsstellung der Klappkarre, d.h. wenn die unteren Holme divergent zueinander verlaufen, an den unteren Holmen an. Durch die Ansätze und die zugehörigen Anschläge im Verbindungsteil lassen sich die Holme nur bis zu einer bestimmten Stellung aus dem Verbindungsteil herausziehen. In dieser Stellung werden sie in der Arbeitsstellung der unteren Holme durch diese arretiert.

Die unteren Holme können auch Aufnahmen für die unteren Enden der oberen Holme aufweisen, z. B. Hülsen, in denen die unteren Enden in divergent verlaufender Stellung der unteren Holme fixierbar sind.

Das flächenförmige Teil bzw. die flächenförmigen Teile der Lastaufnahme sind vorzugsweise in Richtung des Verbindungsteiles schwenkbar und können auf diese Weise an die Holme bzw. aneinandergeklappt werden.

Bei einer in Arbeitsstellung befindlichen Klappkarre befinden sich die oberen Holme in einer oberen Endlage und die unteren Holme sind in einer Stellung, in der sie ausgehend von dem Verbindungsteil divergent nach unten verlaufen, wobei sich zwischen den unteren Enden der unteren Holme die flächenförmige Lastaufnahme in Arbeitsstellung erstreckt, d. h. in einer Stellung, in der sie eine Last aufnehmen kann.

Das Zusammenklappen erfolgt in der erstgenannten Ausführungsform dadurch, daß zunächst die unteren Holme aneinander geklappt werden.

In der zweiten Ausführungsform erfolgt das Zusammenklappen dadurch, daß zunächst die oberen Holme aus den an den unteren Holmen vorgesehenen Aufnahmen gezogen werden. Anschließend wird die Lastaufnahme sofern sie einteilig ist, einseitig gegen einen unteren Holm geschwenkt und dann werden die unteren Holme mit den Radträgern und den Rädern gegeneinander geschwenkt, so daß die unteren Holme etwa parallel zueinander liegen.

Zum Schluß werden die oberen Holme nach unten geschoben, so daß sie neben den unteren Holmen liegen. In dieser Stellung läßt sich die Klappkarre mittels des am Verbindungsteil befindlichen Griffes bequem transportieren und sie läßt sich gut verstauen.

Wenn die Lastaufnahme aus zwei oder mehreren Teilen besteht, werden die im Bereich der unteren Holme schwenkbar befestigten Teile in der Mitte angehoben und beim Schwenken der unteren Holme aneinandergeklappt.

Das Teil bzw. die Teile der Lastaufnahme können zusätzlich um eine parallel zu den Radachsen verlaufende Achse schwenkbar sein. Dadurch wird erreicht, daß das hochgeklappte Teil bzw. die hochgeklappten Teile, die zum Teil außerhalb der Räder liegen, zwischen die Räder geschwenkt werden, wodurch die zusammengeklappte Karre noch kompakter wird.

Zur zusätzlichen Sicherung der unteren Holme in ihrer Arbeitsstellung ist es zweckmäßig, daß zwei schwenkbare Querstreben vorgesehen sind, wobei je eines ihrer Enden mit je einem unteren Holm drehbar verbunden ist und deren andere Enden miteinander drehbar verbunden sind.

Die Querstreben sind an ihrer Verbindungsstelle in fluchtender Stellung miteinander verrastbar.

In einer bevorzugten Ausführungsform weisen die Querstreben an Ihrer Verbindungsstelle Stege auf, die im wesentlichen senkrecht zu den Querstreben verlaufen. Die Querstreben sind dann über diese Stege drehbar miteinander verbunden. Bei waagerechter Stellung der Querstreben, also in Arbeitsstellung der Klappkarre, verlaufen die Stege senkrecht nach unten. In zusammengeklappter Stellung der Klappkarre erstrecken sich die Querstreben in senkrechter Richtung und die Stege in waagerechter Richtung, wobei zur Definition der Richtungen von einer Stellung der Klappkarre auf einer waagerechten Unterlage ausgegangen worden ist.

Eine weitere Ausgestaltung der Erfindung sieht vor, daß im zusammengeklappten Zustand der Klappkarre die Teile der Lastaufnahme unmittelbar unter die Stege klappbar sind, wodurch die Stege verriegelt werden. Dadurch wird erreicht, daß sich die Stege nicht nach unten drehen können. Damit wird ein unbeabsichtigtes Auseinanderklappe der Klappkarre verhindert.

In einer weiteren Ausführungsform ist vorgesehen, daß anstelle einer festen Verbindung zwischen den unteren Holmen und den Radträgern eine Drehverbindung vorgesehen ist. Dadurch wird erreicht, daß die Räder in zusammengeklappter Stellung der Klappkarre parallel bzw. nahezu parallel verlaufen, so daß der Platzbedarf für die Klappkarre weiter verringert wird.

Die Erfindung soll in Ausführungsbeispielen anhand von Zeichnungen näher erläutert werden. Es zeigen:
- Fig. 1: eine perspektivische Ansicht einer Klappkarre in einer Stellung, in der sie eine Last aufnehmen kann;
- Fig. 1a: den Verlauf der Radachse und der senkrecht dazu verlaufenden Schwenkachse der Teile der Lastaufnahme;
- Fig. 2: eine perspektivische Ansicht einer Klappkarre in zusammengeklappter Stellung;
- Fig. 3: eine perspektivische Ansicht des Unterteils einer Klappkarre mit zusätzlichen Streben in ausgeklappter Stellung;
- Fig. 4: die Ansicht nach Fig. 3 in teilweise geklappter Stellung;
- Fig. 5: die Ansicht eines Radträgers mit zusätzlicher Schwenkmöglichkeit der Lastaufnahme um eine parallel zu den Radachsen liegende Achse;
- Fig. 6: die Ansicht nach Fig. 5 mit geschwenkter Lastaufnahme;
- Fig. 7: einen Schnitt durch das Verbindungsteil zwischen unteren und oberen Holmen gemäß Fig. 1;
- Fig. 8: einen Schnitt durch einen Radträger wie er in Fig. 1 dargestellt ist, der drehbar an einem unteren Holm befestigt ist;
- Fig. 9a u. 9b: eine Hälfte des Verbindungsteils mit oberen und unteren Holmen in Arbeitsstellung und in eingeklappter Stellung;
- Fig. 10a-d: Teilansichten einer Klappkarre mit zusätzlichen Querstreben mit unterschiedlichen Stellungen der Querstreben, wobei die Räder nicht dargestellt sind.

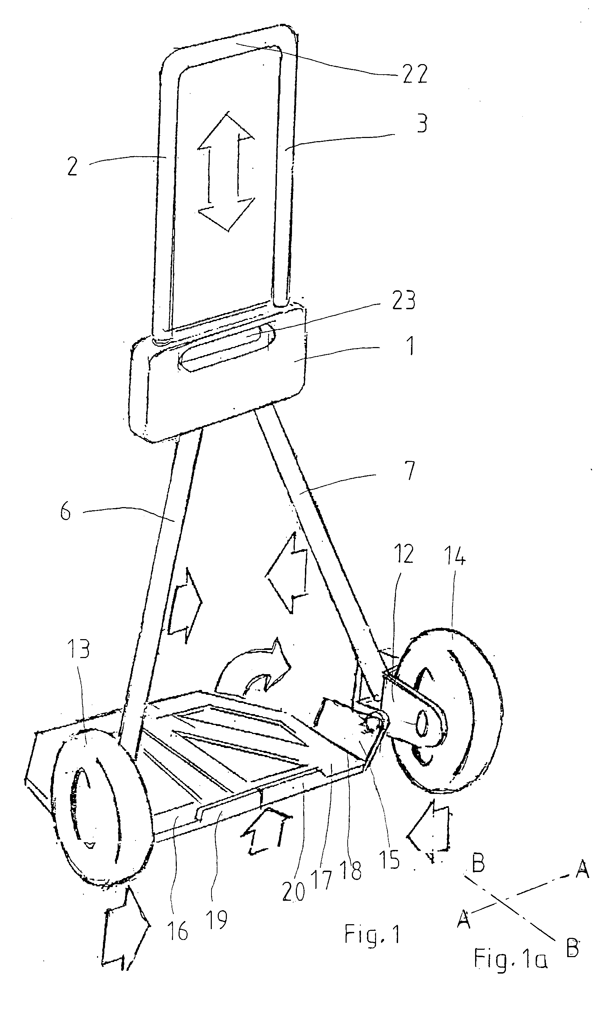

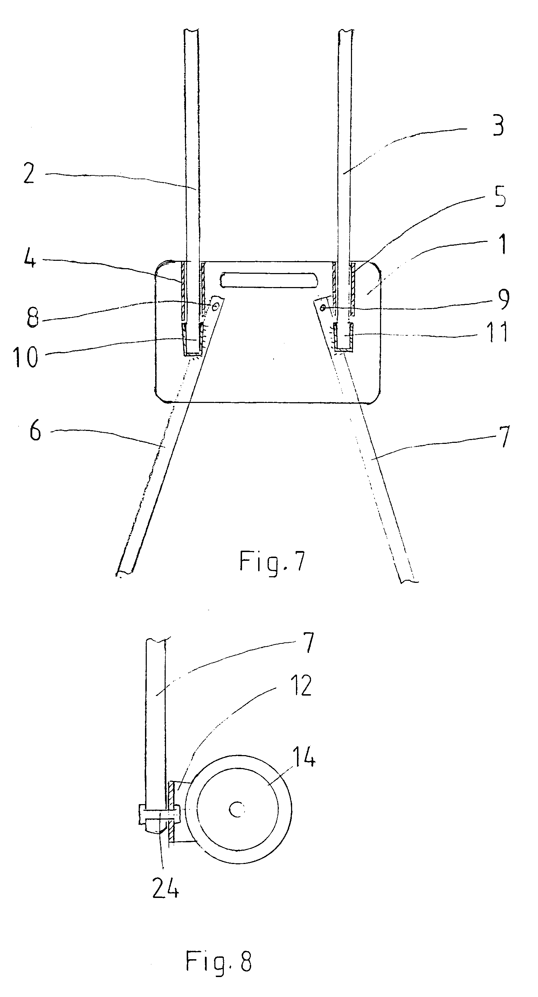

Die Beschreibung erfolgt zunächst anhand der Figuren 1 und 7. Die Klappkarre weist ein Verbindungsteil 1 auf, in dem Zwei obere Holme 2, 3 in Lagern 4, 5 axial verschiebbar angeordnet sind. Weiterhin sind im Verbindungsteil 1 zwei untere Holme 6, 7 in Lagern 8, 9 drehbar gelagert. Die unteren Holme 6, 7 weisen Hülsen 10, 11 für die Aufnahme der unteren Enden der oberen Holme 2, 3 auf.

An jedem unteren Holm 6, 7 ist ein Radträger 12 vorgesehen, von denen in den Figuren nur einer sichtbar ist. An den Radträgern 12 sind Räder 13, 14 gelagert.

An den Radträgern sind entsprechend dem Ausführungsbeispiel der Fig. 1 Halterungen 15 für eine flächenförmige Lastaufnahme vorgesehen. Von den Halterungen ist in der Fig. 1 nur eine sichtbar. Die flächenförmige Lastaufnahme besteht aus zwei Teilen 16, 17, die an den Halterungen 15 mittels Scharnieren 18 befestigt sind. Die Scharniere 18 ermöglichen das Hochklappen der Teile 16, 17 um senkrecht zu den Radachsen A - A verlaufende Achsen B -B (Fig.1a) Die Teile 16, 17 weisen weiterhin Randteile 19, 20 auf, die einerseits das Herunterrutschen der zu transportierenden Last verhindern und andererseits auch das Wegklappen der Teile 16, 17 nach unten verhindern.

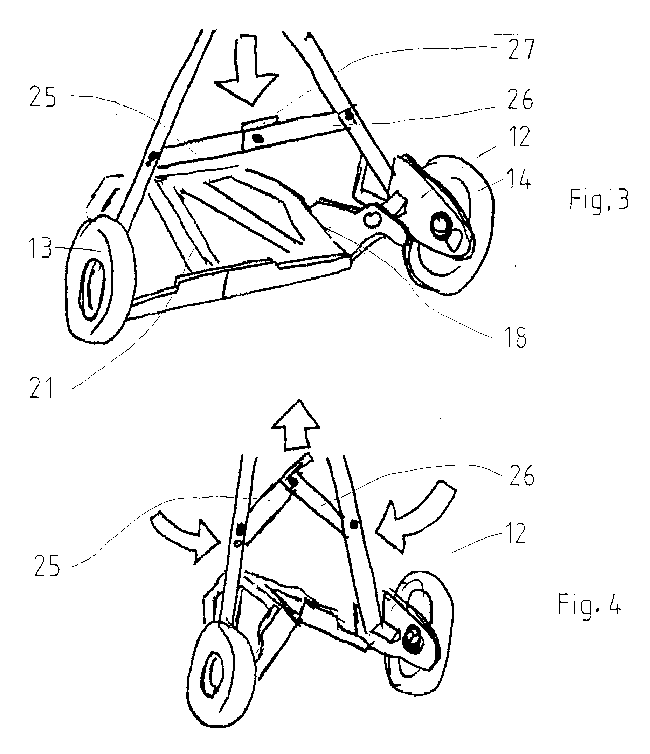

Entsprechend dem Ausführungsbeispiel der Fig. 3 sind die Teile 16, 17 untereinander ebenfalls durch ein Scharnier 21 verbunden.

Wie insbesondere den Figuren 1 und 7 zu entnehmen ist, verlaufen in einer Stellung der Klappkarre, in der eine Last, z. B. ein Gepäckstück, aufgenommen werden kann, die unteren Holme 6, 7 ausgehend von den Lagern 8, 9 divergent, d.h. sie verlaufen schräg nach außen. In dieser Stellung werden sie durch die oberen Holme 2, 3 fixiert, deren untere Enden in den Hülsen 10, 11 stecken. In dieser Stellung bilden die Teile 16, 17 der Lastaufnahme eine Ebene.

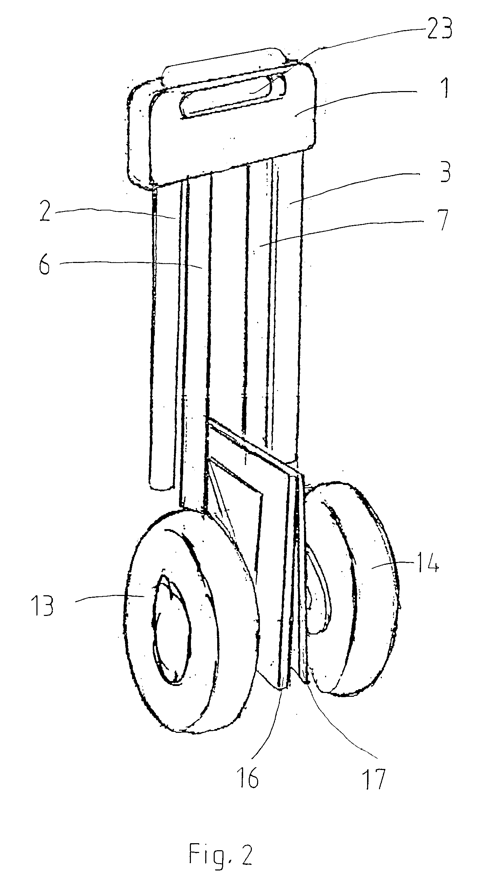

Für das Zusammenklappen der Klappkarre müssen zunächst die oberen Holme 2, 3 aus den Hülsen 10, 11 gezogen werden. Danach werden beim Ausführungsbeispiel der Fig. 1 die Teile 16, 17 der Lastaufnahme an die unteren Holme 6, 7 geklappt, die ihrerseits gegeneinander geschwenkt werden, bis sie parallel zueinander liegen und zwischen ihnen die geklappten Teile 16, 17 hochkant liegen (Fig. 2). Anschließend werden die oberen Holme 2, 3 mit Hilfe eines sie verbindenden Querholms 22 nach unten gedrückt, bis der Querholm auf dem Verbindungsteil 1 aufliegt. Wie aus Fig. 2 ersichtlich ist, weist die Klappkarre im zusammengeklappten Zustand eine handliche Form auf, so daß sie einerseits unter Nutzung des Verbindungsteils 1 als Griff leicht getragen werden kann und andererseits auch einfach verstaut werden kann. Zur besseren Handhabbarkeit als Griff kann das Verbindungsteil 1 einen Durchbruch 23 aufweisen.

In dem Ausführungsbeispiel der Fig. 8 ist anstelle einer festen Verbindung zwischen den unteren Holmen 6, 7 und den Radträgern 12 eine Drehverbindung 24 vorgesehen. Diese ist hier nur für den unteren Holm 7 dargestellt. Bei diesem Ausführungsbeispiel werden die Radträger 12 in der in Fig. 1 gezeigten Stellung, in der die Lastaufnahme möglich ist, durch die Teile 16, 17 und die Halterungen 15 in ihrer Lage fixiert. Beim Zusammenklappen der Klappkarre ist diese Arretierung aufgehoben, so daß sich die Radträger 12 in der Drehverbindung 24 drehen können und dadurch auch im eingeklappten Zustand der Klappkarre eine annähernd parallele Lage zueinander aufweisen. Dadurch liegen auch die Räder im eingeklappten Zustand der Klappkarre zumindest annähernd parallel zueinander, so daß der Platzbedarf für die Klappkarre weiter verringert wird.

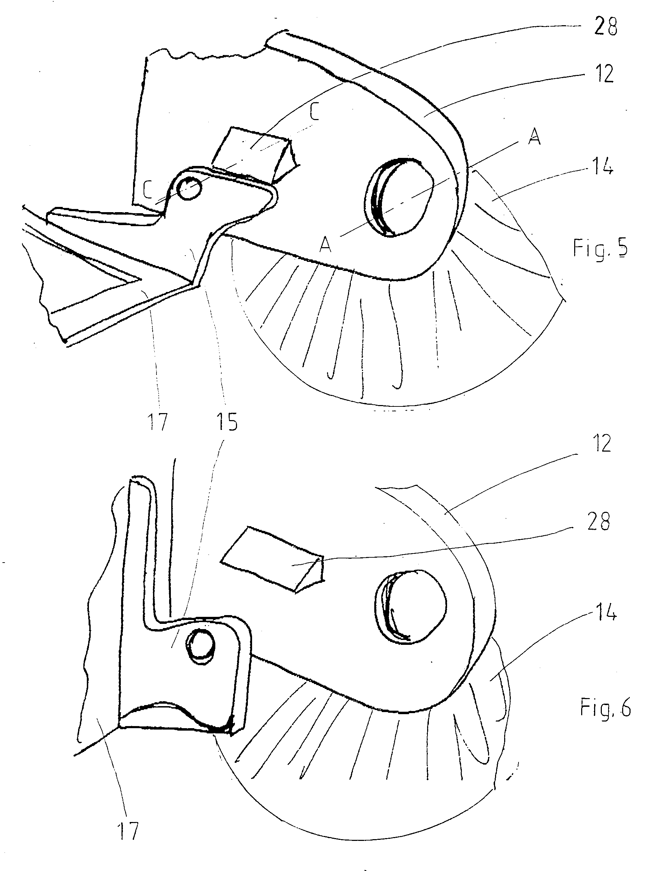

In Verbindung mit der Fig. 7 wurde bereits die Fixierung der unteren Holme 6, 7 mittels der oberen Holme 2, 3 beschrieben. Im Ausführungsbeispiel der Figuren 3 und 4 ist eine zusätzliche Arretierung vorgesehen. Dazu sind zwischen den unteren Holmen 6, 7 Querstreben 25, 26 vorgesehen, die zueinander und bezüglich der unteren Holme 6, 7 schwenkbar sind und die in der Arbeitsstellung der Holme einrastbar sind. Dazu weist die Querstrebe 25 eine Verlängerung 27 auf, die an der Oberkante der anderen Querstrebe 26 einrasten kann, wie es in Fig. 3 dargestellt ist.

Im Ausführungsbeispiel der Figuren 5 und 6 sind die Halterungen 15 um parallel zu den Radachsen A - A verlaufende Achsen C - C schwenkbar, so daß die Teile 16, 17 der Lastaufnahme zusätzlich um diese Achsen schwenkbar sind. Zur Arretierung der Halterungen 15 in der Lastaufnahmestellung, wie sie in der Fig. 5 dargestellt ist, ist ein Vorsprung 28 an den Radträgern 12 vorgesehen. Die Fig. 6 zeigt die Halterungen 15 im hochgeklappter Stellung.

Mit dieser Ausführungsform ist es möglich, den Platzbedarf der Klappkarre in eingeklappter Stellung weiter zu verringern, da nunmehr die Teile 16, 17 der Lastaufnahme, die die Räder im eingeklappter Stellung teilweise nach einer Seite überragen, zwischen die Räder geklappt werden können.

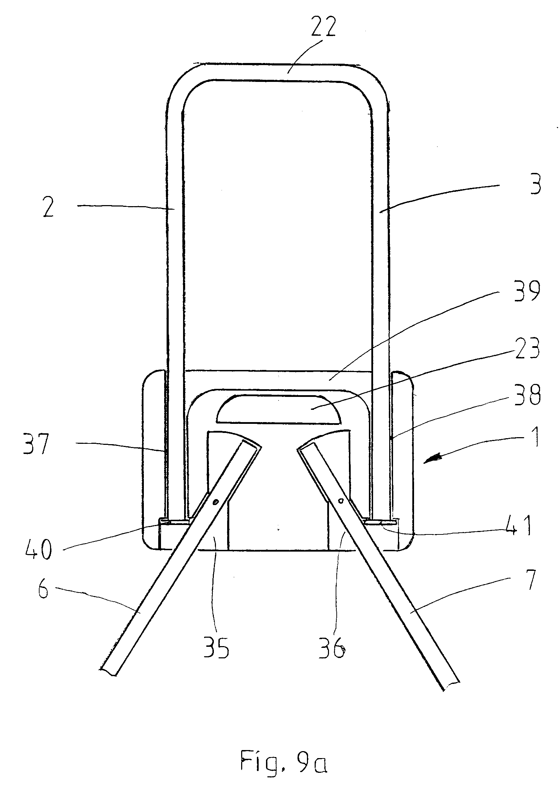

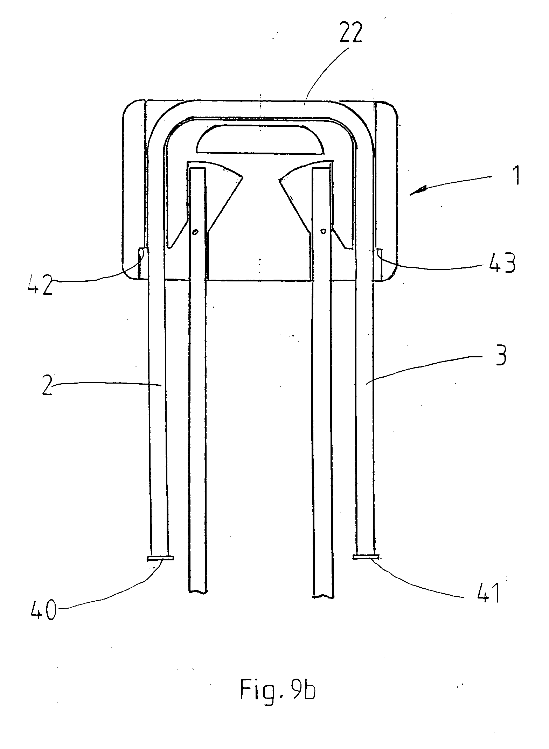

Beim Ausführungsbeispiel der Figuren 9a und b weist die dort dargestellte Hälfte de des Verbindungsteils 1 Vertiefungen 35, 36 für die Lagerung der unteren Holme 6, 7 auf. Diese sind so ausgestaltet, daß sich die unteren Holme in ihnen aus der Arbeitsstellung (Fig. 9a) in eine parallele Stellung (Fig. 9b) drehen lassen. Weiterhin sind Vertiefungen 37, 38 für die Lagerung der oberen Holme vorgesehen. In diesen lassen sich die oberen Holme verschieben. Schließlich ist noch eine Vertiefung 39 für die Aufnahme des Querholmes 22 vorgesehen.

Gleichartige Vertiefungen sind in der anderen nicht dargestellten Hälfte des Verbindungsteils 1 vorgesehen. Wenn beide Hälften mit ihren Vertiefungen aufeinander gelegt und miteinander verbunden werden, z. B. verschraubt werden, ergeben sich Führungskanäle für die Holme.

Die oberen Holme 3, 4 weisen an ihrem unteren Ende Ansätze 40, 41 auf, die in Arbeitsstellung der Holme an Anschlägen 42, 43 anliegen. In der in Fig. 9a gezeigten divergenten Arbeitsstellung der Holme 6, 7, stellen diese einen Anschlag für die Ansätze 40, 41 dar. Damit sind diese und zugleich die oberen Holme 2, 3 in Ihrer Arbeitsstellung fixiert.

Soll die Klappkarre in der Ausführungsform nach den Figuren 9a und b eingeklappt werden, werden zunächst die unteren Holme aus der divergenten Stellung in eine parallele Stellung gedreht (Fig. 9b). Anschließend können dann die oberen Holme 2, 3 nach unten verschoben werden, bis der Querholm 22 in der Vertiefung 39 anliegt.

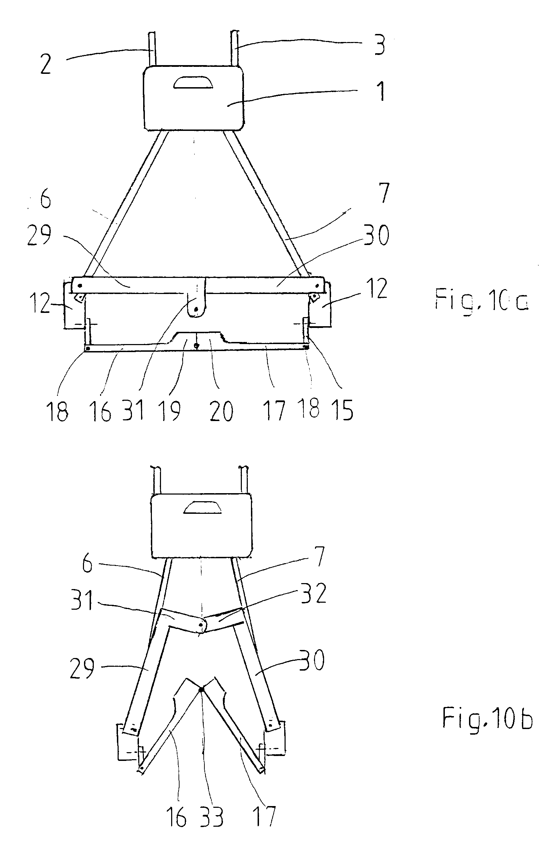

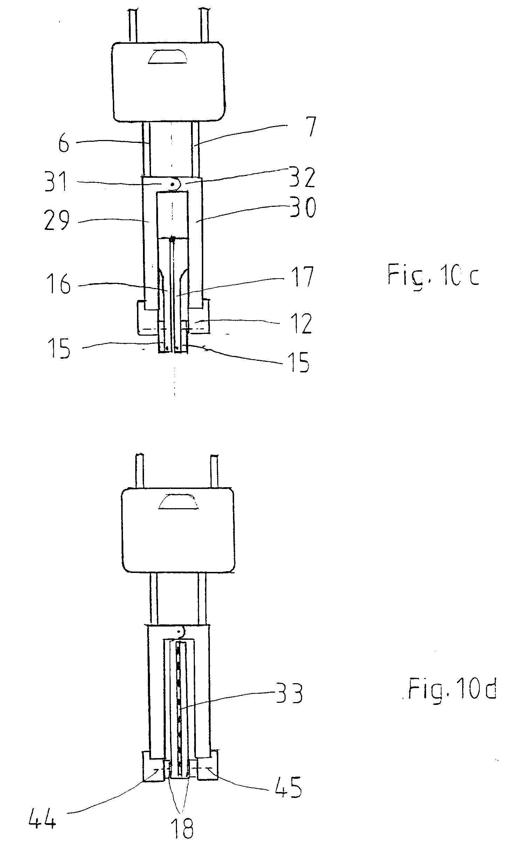

Im Ausführungsbeispiel der Figuren 10 a - d sind am unteren Ende der unteren Holme 6, 7 Querstreben 29, 30 drehbar gelagert. Diese weisen Stege 31, 32 auf, die drehbar miteinander verbunden sind. Die Querstreben sichern in der Arbeitsstellung der Klappkarre diese zusätzlich gegen eiln unbeabsichtigtes Zusammenklappen (Fig. 10a).

Die Klappkarre wird zusammengeklappt, indem die Teile 16, 17 der Lastaufnahme und die Querstreben 29, 30 angehoben werden (Fig. 10b). Die unteren Holme werden in eine zumindest annähernd parallele Stellung zueinander gebracht, wobei auch die Querstreben 29, 30 die gleiche Stellung einnehmen. In dieser Stellung der Querstreben 29, 30 liegen die Stege 31, 32 waagerecht (Fig. 10c).

In der Stellung der Fig. 10c sind die Teile 16, 17 der Lastaufnahme lediglich hoch geklappt. Durch Drehung der Teile 16, 17 um die Achsen 44, 45 um einen Winkel von 90°, so daß nunmehr das Mittelscharnier 33 sichtbar ist, werden diese Teile unmittelbar unter die Stege 31, 32 gebracht, wodurch diese arretiert werden. Beim Versuch, die unteren Holme in die divergente Stellung zu bringen, stoßen die Kanten der Stege 31, 32 jetzt an die Kanten der Teile 16, 17, wodurch das Auseinanderklappen der Karre verhindert wird.

In dieser zusammengeklappten Form stellt die Klappkarre ein handliches Gepäckstück dar, das sich leicht verstauen läßt.

## Patentansprüche

1. Klappkarre mit mindestens zwei oberen und zwei unteren gegeneinander verschiebbaren Holmen sowie mit an den unteren Holmenpaaren angebrachten Radträgern mit Rädern
**dadurch gekennzeichnet,**
daß mindestens eine Lastaufnahme vorgesehen ist, die aus mindestens einem flächenförmigen Teil (16, 17) besteht, das um eine quer zu den Radachsen (A - A) verlaufende Achse (B - B) schwenkbar ist, und daß die unteren Holme (6, 7) ebenfalls um quer zu den Radachsen (A - A) verlaufende Achsen (B - B) schwenkbar sind.

2. Klappkarre nach Anspruch 1, **dadurch gekennzeichnet,** daß die quer verlaufenden Achsen (B - B) unter 90° zu den Radachsen (A - A) verlaufen.

3. Klappkarre nach Anspruch 1 oder 2, **dadurch gekennzeichnet,** daß die unteren Holme (6, 7) an ihren oberen Enden schwenkbar gelagert sind.

4. Klappkarre nach mindestens einem der vorhergehenden Ansprüche, **dadurch gekennzeichnet,** daß eine Lastaufnahme vorgesehen ist, die aus einem Teil besteht, und daß sich dieses Teil im Bereich der unteren Enden der unteren Holme zwischen diesen Holmen erstreckt, im Bereich einer der Holme schwenkbar befestigt ist und dem im Bereich des anderen Holmes eine Auflage zugeordnet ist.

5. Klappkarre nach mindestens einem der vorhergehenden Ansprüche, **dadurch gekennzeichnet,** daß die Lastaufnahme aus zwei Teilen (16, 17) besteht, die im Bereich der unteren Enden der unteren Holme (6, 7) schwenkbar befestigt sind, wobei jedes Teil mindestens eine unter einem Winkel, vorzugsweise unter einem rechten Winkel zur Lastaufnahmefläche der Teile verlaufendes Randteil (19, 20) aufweist, die in der Lastaufnahmestellung der Teile (16, 17) mit ihren Stirnseiten aneinanderliegen.

6. Klappkarre nach mindestens einem der vorhergehenden Ansprüche, **dadurch gekennzeichnet,** daß die Teile (16, 17) der Lastaufnahme an den Radträgern (12) angeordnet sind.

7. Klappkarre nach mindestens einem der vorhergehenden Ansprüche, **dadurch gekennzeichnet,** daß die Teile (16, 17) der Lastaufnahme untereinander gelenkig verbunden sind.

8. Klappkarre nach mindestens einem der vorhergehenden Ansprüche, **dadurch gekennzeichnet,** daß die Teile (16, 17) der Lastaufnahme mit den Radträgern durch Scharniere (18, 21) verbunden sind.

9. Klappkarre nach mindestens einem der vorhergehenden Ansprüche, **dadurch gekennzeichnet,** daß ein Verbindungsteil (1) vorgesehen ist, in dem zwei untere Holme (6, 7) schwenkbar und zwei obere Holme (2, 3) verschiebbar gelagert sind.

10. Klappkarre nach mindestens einem der vorhergehenden Ansprüche, **dadurch gekennzeichnet,** daß das Verbindungsteil (1) als Griff ausgebildet ist.

11. Klappkarre nach mindestens einem der vorhergehenden Ansprüche, **dadurch gekennzeichnet,** daß die oberen Holme (2, 3) parallel zueinander verlaufen, während die unteren Holme (6, 7) vom Verbindungsteil ausgehend zwischen einer parallelen und einer in Richtung der Radträger (12) divergent verlaufenden Stellung schwenkbar sind.

12. Klappkarre nach mindestens einem der vorhergehenden Ansprüche, **dadurch gekennzeichnet,** daß das Verbindungsteil (1) aus zwei Halbteilen besteht, wobei jedes Halbteil Vertiefungen (36, 37) für die Aufnahme der unteren Holme (6, 7), Vertiefungen (37, 38) für die Aufnahme der oberen Holme (2, 3) sowie eine Vertiefung (39) für den Querholm (22) aufweist.

13. Klappkarre nach mindestens einem der vorhergehenden Ansprüche, **dadurch gekennzeichnet,** daß die oberen Holme (2, 3) an ihren unteren Enden Ansätze (40, 41) aufweisen, denen Anschläge (42, 43) mindestens in einem Halbteil des Verbindungsteils zugeordnet sind, und die in Arbeitsstellung der Klappkarre an den unteren Holmen (6, 7) anliegen.

14. Klappkarre nach mindestens einem der vorhergehenden Ansprüche, **dadurch gekennzeichnet,** daß die unteren Holme (6, 7) Aufnahmen für die unteren Enden der oberen Holme aufweisen, in denen die unteren Enden in divergent verlaufender Stellung der unteren Holme fixierbar sind.

15. Klappkarre nach mindestens einem der vorhergehenden Ansprüche, **dadurch gekennzeichnet,** daß als Aufnahmen Hülsen (10, 11) vorgesehen sind.

16. Klappkarre nach mindestens einem der vorhergehenden Ansprüche, **dadurch gekennzeichnet,** daß die Lastaufnahme bzw. deren Teile in Richtung des Verbindungsteiles (1) schwenkbar sind.

17. Klappkarre nach mindestens einem der vorhergehenden Ansprüche, **dadurch gekennzeichnet,** daß die Teile (16, 17) der Lastaufnahme um eine parallel zu den Radachsen verlaufende Achse schwenkbar sind.

18. Klappkarre nach mindestens einem der vorhergehenden Ansprüche, **dadurch gekennzeichnet,** daß zwischen den unteren Holmen (6, 7) schwenkbare Querstreben (25,26) vorgesehen sind, die in der Arbeitsstellung der Holme (6, 7) einrastbar sind.

19. Klappkarre nach mindestens einem der vorhergehenden Ansprüche, **dadurch gekennzeichnet,** daß zwei schwenkbare Querstreben (25, 26; 29, 30) vorgesehen sind, deren eine Enden mit je einem unteren Holm (6, 7) drehbar verbunden sind und deren andere Enden miteinander drehbar verbunden sind.

20. Klappkarre nach mindestens einem der vorhergehenden Ansprüche, **dadurch gekennzeichnet,** daß die Querstreben (25, 26) an ihrer Verbindungsstelle in fluchtender Stellung miteinander verrastbar sind.

21. Klappkarre nach mindestens einem der vorhergehenden Ansprüche, **dadurch gekennzeichnet,** daß die Querstreben (29, 30) an Ihrer Verbindungsstelle Stege (31, 32) aufweisen, die im wesentlichen senkrecht zu den Querstreben (29, 30) verlaufen.

22. Klappkarre nach mindestens einem der vorhergehenden Ansprüche, **dadurch gekennzeichnet,** daß im zusammengeklappten Zustand der Klappkarre die Teile der Lastaufnahme (16, 17) unmittelbar unter die Stege (31, 32) klappbar sind.

23. Klappkarre nach mindestens einem der vorhergehenden Ansprüche, **dadurch gekennzeichnet,** daß zwischen den unteren Holmen (6, 7) und den Radträgern eine Drehverbindung (24) besteht.
